# EUROPÄISCHE PATENTSCHRIFT

(11) **EP 1 924 399 B1**
(45) Veröffentlichungstag und Bekanntmachung des Hinweises auf die Patenterteilung: **21.11.2012**
(21) Anmeldenummer: 06792589.1
(22) Anmeldetag: 27.07.2006
(51) Int. Cl.: B23Q 7/14

(54) **VORRICHTUNG ZUM TRANSPORTIEREN VON WERKSTÜCKTRÄGERN**
DEVICE FOR TRANSPORTING WORKPIECE HOLDERS
DISPOSITIF POUR TRANSPORTER DES SUPPORTS DE PIECE A USINER

(30) Priorität: 25.08.2005 DE 102005040165
(43) Veröffentlichungstag der Anmeldung: 28.05.2008
(73) Patentinhaber: ROBERT BOSCH GMBH, 70442 Stuttgart (DE)
(72) Erfinder: SCHLAICH, Peter, 71229 Leonberg (DE); FRANGEN, Joachim, 74081 Heilbronn (DE); BENKERT, Frank, 71732 Tamm (DE); BAIER, Wolfram, 73760 Ostfildern (DE); TEOH, Ka-Jin, 70193 Stuttgart (DE)
(74) Vertreter: Maiß, Harald
(86) Internationale Anmeldenummer: PCT/EP2006/064753
(87) Internationale Veröffentlichungsnummer: WO 2007/023059

(56) Entgegenhaltungen:
- DE-A1- 2 164 390
- DE-A1- 3 212 272
- DE-A1- 3 615 164
- DE-A1- 3 618 755
- DE-U1- 8 908 895
- DE-U1- 20 202 491
- FR-A1- 2 568 861
- US-A- 5 826 692

## Beschreibung

Die vorliegende Erfindung betrifft eine Vorrichtung zum Transportieren von Werkstückträgern nach der im Oberbegriff des Patentanspruches 1 näher definierten Art.

In der Fertigungstechnik werden für die automatisierte Montage und Teilefertigung so genannte Transfersysteme als Transporteinrichtungen eingesetzt, welche einen Werkstückträger mit einem zu bearbeitenden Bauteil als Werkstück von einer Bearbeitungsstation zu einer nächsten Bearbeitungsstation transportieren. Ein häufig eingesetztes Transfersystem arbeitet dabei mit einem Förderband, z. B. ein Doppelgurtband, welches den Transport sowie die Führung des Werkstückträgers übernimmt.

Beispielsweise aus der deutschen Patentschrift DE 100 32 189 B4 ist eine solche Förderstrecke für Stückgut und insbesondere für Werkstückträger bekannt, welche zwei parallel und auf Abstand angeordnete Trageinrichtungen aufweist, auf denen Tragmittel angeordnet sind, von denen wenigstens eines ein Zugmittel ist und die eine Förderebene für das Stückgut bzw. die Werkstückträger bilden.

Diese vorbeschriebene Förderstrecke wird auch als lose Verkettung bezeichnet, bei der die Positioniergenauigkeit zwischen dem Werkstück auf dem Werkstückträger und einem Prozessmodul zum Bearbeiten des Werkstücks eine wichtige Größe ist, so dass der Werkstückträger mit dem zu bearbeitenden Bauteil von der Förderstrecke entnommen werden muss und dem Prozessmodul über präzise geführte Indexierstifte zugeführt werden muss, um so die hohen Genauigkeitsanforderungen zu erfüllen.

Daraus resultieren relativ lange Bauteilwechselzeiten und aufwändig gestaltete Bearbeitungsstationen, welche während der langen Bauteilwechselzeiten nicht ausgelastet sind. Dennoch sind solche losen Verkettungen in der Praxis geschätzt aufgrund ihrer Systemrobustheit, ihrer Staufähigkeit, d. h. ihrer Fähigkeit, nachfolgende Werkstückträger vor einer Bearbeitungsstation zu puffern und somit eine zeitliche Entkopplung von Arbeitsprozessen zu ermöglichen, und der Möglichkeit der Realisierung von Abzweigungen, um z. B. Doppelstationen zu bedienen.

Des Weiteren sind in der Praxis auch sogenannte starre Verkettungen bzw. Verkopplungen als Anordnung zum Transportieren bekannt, bei denen sämtliche Werkstückträger mit den zu bearbeitenden Bauteilen synchron von einer Bearbeitungsstation zur nächsten Bearbeitungsstation bewegt werden. Da die Werkstückträger untereinander verkoppelt sind und somit zwangsgeführt sind, bewegt sich der gesamte Bauteilverbund in einem Takt.

Wenngleich eine solche starre Verkettung relativ schnelle Werkstückträgerwechselzeiten und eine einfache Werkstückträgersteuerung ermöglichen, bedingt sie nachteilhafterweise eine starre, zeitliche Kopplung der Fertigung bei den einzelnen Bearbeitungsstationen. Zudem sind bei dieser Art der Transporteinrichtung keine Abzweigungen realisierbar, und es ist eine aufwändige Mechanik erforderlich, um die Werkstückträgerpositioniergenauigkeit in der Fertigungsanlage zu garantieren.

Die DE 37 30 972 A1 offenbart eine Förderstrecke zwischen mehreren nacheinander angeordneten Montage-, Bearbeitungs- oder Prüfstationen, bei der der Werkstücktransport auf Werkstückträgern in die einzelnen Stationen über eine Transporteinrichtung erfolgt, auf welcher vor den Stationen Puffer für Werkstückträger gebildet sind. Zur Verkürzung der Taktzeit dienen Vorfixier- und Transporteinrichtungen, die die Werkstückträger in eine Bereithaltestellung des Puffers vorfixieren und dann zwangsgesteuert in die zugeordnete Fixier- und Spanneinrichtung für die Werkstückträger in der nachfolgenden Station transportieren. Eine Montagestraße kann dabei in Modulbauweise ausgeführt sein.

Problematisch ist bei den bekannten Zugmittelförderstrecken häufig die Entnahme der Werkstückträger von dem Förderer und die Rückführung an den Förderer mittels einer Greifeinrichtung, da die Greifeinrichtung meist einen vergleichsweise großen Bauraum erfordert und in den Prozessraum hineinragt.

Aus der DE 36 15 164 A1 ist eine Vorrichtung zum Transportieren von Werkstückträgern bekannt. Die Werkstückträger werden reibschlüssig von einem Zugmittel in Form eines Förderbandes mitgenommen, über das sie zu beiden Seiten überstehen. Weiter ist eine Überführeinrichtung vorgesehen, die unterhalb des Förderbandes angeordnet ist. Die Überführeinrichtung kann die Werkstückträger an den beiden vom Förderband überstehenden Seiten von unten greifen, und mittels einer Vertikalbewegung vom Förderband abheben, so dass die auf dem Werkstückträger aufgenommenen Werkstücke in Eingriff mit einer Greifvorrichtung gelangen. Die Greifvorrichtung ist gesondert von der Überführeinrichtung ausgebildet und befördert die Werkstücke mit einer horizontalen Bewegung in eine Bearbeitungsstation, in der sie bearbeitet werden.

Der Nachteil der Transportvorrichtung der DE 36 15 164 A1 besteht zum Einen in der relativ aufwändigen Greifvorrichtung, die gesondert von der Überführvorrichtung ausgeführt ist. Weiter ist auf den hohen Platzbedarf hinzuweisen, der es schwierig macht, die Überführeinrichtung in modularen Fertigungsanlagen einzusetzen, vor allem, wenn sehr viele Überfiflweinrichtungen zum Einsatz kommen sollen.

Aus der DE 89 08 895 U1 ist eine weitere ähnliche Transportvorrichtung bekannt. Hier wird der Werkstückträger mit einer Verschiebevorrichtung horizontal in die Bearbeitungsstation verschoben. Die Verschiebevorrichtung greift an einem über das Zugmittel überstehenden Bereich des Werkstückträgers von unten an. Der Werkstückträger wird hierbei von einer gesonderten Hubvorrichtung von der Förderstrecke abgehoben.

Aus der FR-A1-2 568 861 ist eine Zugmittelförderstrecke bekannt, die aus mehreren Transportmodulen zusammengesetzt ist.

Aus der DE 21 64 390 A1 ist eine Transportvorrichtung mit einer zusätzlichen Umsetzvorrichtung bekannt, mit der Werkstückträger von der Förderstrecke entnommen werden können.

Der vorliegenden Erfindung liegt weiter die Aufgabe zugrunde, eine Vorrichtung zum Transportieren von Werkstückträgern der eingangs genannten Gattung zu schaffen, bei der eine Überführeinrichtung zwischen einer Zugmittelförderstrecke und einem Prozessraum, insbesondere bei einem modularen Aufbau der Zugmittelförderstrecke, den Prozessraum möglichst nicht beeinträchtigt.

### Vorteile der Erfindung

Die erfindungsgemäße Lösung sieth eine Vorrichtung zum Transportieren von Werkstückträgern zwischen mehreren Bearbeitungsstationen vor entsprechend den Merkmalen des Patentanspruches 1.

Eine derartige Vorrichtung hat den Vorteil, dass die Überführeinrichtung unterhalb der Förderebene einfach befestigt werden kann, ohne in einen Prozessraum der Bearbeitungsstation zu ragen. Ein solcher Zugriff auf die Werkstückträger von unten ist insbesondere bei einer kompakten Bauweise der Zugmittelförderstrecke, wie sie bei einem modularen Aufbau mit jeweils zugeordnetem Bearbeitungsmodul vorliegen kann, günstig.

Des Weiteren ermöglich eine derartige Anordnung und Zugriffsweise der Überführeinrichtung eine einfache Umsetzbewegung der Werkstückträger, welche bei einer solchen Anordnung der Überführeinrichtung durch einfaches Anheben und Drehen oder Linearverschieben umgesetzt werden können.

In einer vorteilhaften Ausgestaltung der Erfindung umfasst die Zugmittelförderstrecke ein Einlaufband zum Zuführen der Werkstückträger und ein parallel beabstandet hierzu angeordnetes Rücklaufband zum Zurückführen der Werkstückträger als Fördereinrichtungen. Als Einlaufband und als Rücklaufband kann ein Einfachgurtband, ein Doppelgurtband und/oder ein Rollenband verwendet werden, wobei der Fachmann jedoch auch jede andere für den jeweiligen Anweridungsfall geeignete Art an Fördereinrichtung einsetzen kann.

Gemäß einer vorteilhaften Ausführung der erfindungsgemäßen Vorrichtung kann die Zugmittelförderstrecke aus mehreren einen durchgehenden Transportweg bildenden Transportmodulen ausgebaut sein, wobei jedes Transportmodul einer bestimmten Bearbeitungsstation zugeordnet ist und wenigstens eine Fördereinrichtung und eine Überführeinrichtung für die Werkstückträger aufweist.

Mit einer solchen modularen Ausgestaltung der Zugmittelförderstrecke werden eine löse Verkettung und sämtliche mit dieser Art des Werkstückträgertransports verbundenen Vorteile erzielt. Dabei können neben einer robusten und kostengünstigen Gestaltung der Transportmodule z. B. kurze Bauteilwechselzeiten und eine zeitliche Entkopplung der einzelnen Fertigungsprozesse in den Bearbeitungsstationen realisiert werden, indem z. B. Werkstückträger vor den Bearbeitungsstationen aufgrund der losen Verkettung aufgestaut werden können, so dass eine Art Pufferung besteht.

Des Weiteren sind beliebige Abzweigungen in der Zugmittelförderstrecke möglich, um z. B. Doppelbearbeitungsstationen bedienen zu können.

Eine modulare Förderstrecke ermöglicht weiterhin eine modular aufgebaute Linie bzw. Straße z. B. einer Fertigungsanlage, wobei mehrere nebeneinander angeordnete Stationen mit den jeweils zugeordneten Transportmodulen, welche einen durchgehenden Transportweg für die Bauteile in einer Fertigungs-, Montage- oder Prüfstraße bilden, zusammenwirken.

Bei der vorbeschriebenen Art der Anordnung der einzelnen Bearbeitungs- oder Prüfstationen ist es besonders vorteilhaft, wenn die Transportmodule derart aneinander angepasst sind, dass jedes Transportmodul aus der jeweiligen Bearbeitungs- oder Prüfstation herausziehbar ist. Dazu können die einzelnen Transportmodule eine kompakte Bauweise ohne seitliche Störkonturen aufweisen, so dass der Bediener die Transportmodule vorzugsweise zusammen mit den zugeordneten Prozessmodulen durch eine einfache Auszugbewegung wechseln kann. Dadurch können auch auf einfachste Weise Veränderungen einer Fertigungslinie bzw. des Transportweges z. B. einer Fertigungsanlage ermöglicht werden.

Im Rahmen einer vorteilhaften Ausgestaltung der Erfindung kann vorgesehen sein, dass jedes Transportmodul ein Einlaufband zum Zuführen von Werkstückträgern z. B. mit zu bearbeitenden Bauteilen, und ein parallel hierzu angeordnetes Rücklaufband zum Zurückführen der leeren oder bestückten Werkstückträger als Fördereinrichtungen umfasst.

Auf diese Weise kann ein zu bearbeitendes Bauteil über das Einlaufband in die jeweilige Bearbeitungsstation transportiert werden, wobei nach der Bearbeitung in dem zugeordneten Prozessmodul das bearbeitete Bauteil über das Einlaufband aus der Bearbeitungsstation geführt werden kann. Durch die Aneinanderreihung mehrerer Bearbeitungsstationen mit den zugeordneten Transportmodulen entstehen somit zwei durchgängige Transportstrecken, eine für den Einlauf der Werkstückträger und eine weitere in Gegenrichtung für den Rücktransport der Werkstückträger.

Erfindungsgemäß ist zumindest einer Fördereinrichtung, insbesondere dem Einlaufband, zumindest eine erste Umsetzeinrichtung als Überführeinrichtung zugeordnet, mit der der Werkstückträger mit dem Bauteil von dem Einlaufband entnehmbar und einem Prozessmodul zum Bearbeiten des Bauteils zuführbar sowie nach der Bearbeitung aus dem Prozessmodul wieder entnehmbar ist.

Bei einer starren Verkettung der Bearbeitungsmodule ist das Umsetzen der Werkstückträger in das Prozessmodul dahingehend vorteilhaft, dass das Prozessmodul auch während des Transports der Werkstückträger von einer Bearbeitungsstation zur nächsten genutzt werden kann. Das Prozessmodul ist oft der kostenintensivste Bestandteil einer Bearbeitungsstation und kann somit optimal ausgenutzt werden, da es nur während des Umsetzens der Werkstückträger stillsteht.

In diesem Zusammenhang besteht ein weiterer Vorteil einer erfindungsgemäß vorgeschlagenen Umsetzeinrichtung darin, dass zwei Werkstückträger mit einer Umsetzbewegung versetzt werden können, wodurch die Umsetzzeit, d. h. die Prozessstillstandszeit, halbiert wird.

Weiter hat das Umsetzen in das Prozessmodul den Vorteil, dass der Werkstückträger und damit das Werkstück besser zum Prozess hin ausgerichtet werden kann, weil dort keine Transportbänder den Zugang zum Werkstückträger behindern.

Darüber hinaus kann für jeden Bearbeitungsprozess eine besonders geeignete Werkstückträgerhalterung vorgesehen werden.

Es ist auch denkbar, den Werkstückträger im Prozessmodul während der Bearbeitung zu bewegen, z. B. durch Drehen um eine Hochachse, so dass das Werkstück immer zugänglich ist.

Unter dem Begriff des Umsetzens ist jedoch nicht nur ein Heben und Drehen der Werkstückträger zu verstehen, sondern alternativ kann auch ein Heben und lineares Verfahren der Werkstückträger auch über größere Strecken vorgesehen sein.

Gemäß einer vorteilhaften Ausgestaltung können die Werkstückträger, welche mit seitlichem Überstand auf dem Einlaufband in die Bearbeitungsstation transportiert werden, über einen Stopper oder dergleichen, der der Umsetzeinrichtung zugeordnet ist, an derselben gestoppt werden, so dass die Umsetzeinrichtung den jeweiligen Werkstückträger mit dem Bauteil von dem Einlaufband entfernen und dem Prozessmodul zuführen kann.

Gemäß einer Weiterbildung kann der Fördereinrichtung zum Zuführen der Werkstückträger bzw. dem Einlaufband und der Fördereinrichtung zum Rückführen der Werkstückträger bzw. dem Rücklaufband eine zweite Umsetzeinrichtung gemeinsam zugeordnet sein, mit der Werkstückträger mit oder ohne dem bearbeiteten Bauteil von dem Einlaufband auf das Rücklaufband oder von dem Rücklaufband auf das Vorlaufband bringbar ist.

Beispielsweise kann die zweite Umsetzeinrichtung zwischen dem Einlaufband und dem Rücklaufband angeordnet sein, so dass diese den Werkstückträger mit dem bearbeiteten Bauteil von dem Einlaufband auf das Rücklaufband oder von dem Rücklaufband auf das Vorlaufband umsetzen kann.

Zur Handhabung der Werkstückträger mit der erfindungsgemäßen Vorrichtung ist es weiterhin zweckmäßig, wenn jede Umsetzeinrichtung eine Höhenverstelleinrichtung bzw. eine Hubachse und eine Dreheinrichtung aufweist.

Eine mögliche Ausführungsform der Erfindung sieht vor, dass die Höhenverstelleinrichtung bzw. Hubachse zumindest ein über einen Linearschlitten oder dergleichen höhenverstellbares Zapfenpaar aufweist, das in korrespondierende Öffnungen des jeweiligen Werkstückträgers eingreifen kann, um den Werkstückträger beispielsweise von dem Einlaufband abzuheben.

Es ist somit bei der erfindungsgemäßen Vorrichtung eine äußerst einfache Ausgestaltung der Greifhilfen an der Überführeinrichtung und an den Werkstückträgern möglich, da mit einfachen Zapfen oder Stiften an der Überführeinrichtung und mit fluchtenden Bohrungen an den Werkstückträgern bereits eine Hubbewegung ausreicht, um einen Werkstückträger positionssicher zu fassen, ohne dass hierfür eine aufwändige Schließbewegung eines Greifers notwendig ist.

Wenn zwei Zapfenpaare an der Überführ- bzw. Umsetzeinrichtung vorgesehen sind, die separat höhenverfahrbar sind, kann vorteilhafterweise ein Zapfenpaar im Prozessnest zur Werkstückträgerpositionierung verwendet werden, während das andere Zapfenpaar einen Werkstückträger auf die Förderbahn absetzen und wieder aufnehmen kann. Somit kann durch zwei gegenüberliegende Zapfenpaare die Umsetzeinrichtung gleichzeitig ein bereits fertig bearbeitetes Bauteil aus dem Prozessmodul und ein noch nicht bearbeitetes Bauteil von dem Förderband in das Prozessmodul befördern, wodurch die Wechselzeiten weiter reduziert werden.

Alternativ zu der Ausgestaltung mit Zapfen an der Überführ- bzw. Umsetzeinrichtung und Bohrungen an dem Werkstückträger, in welche die Zapfen einfahrbar sind, kann in weiteren Ausführungen je nach Anwendungsfall auch jeder andere bekannte Greifmechanismus zur Handhabung der Werkstückträger Anwendung finden.

Um den von dem Einlaufband abgehobenen Werkstückträger dem Prozessmodul zuzuführen, kann gemäß einer nächsten Weiterbildung als Dreheinrichtung ein Schwenkantrieb vorgesehen sein, der eine Drehung des Zapfenpaares in einer horizontalen Ebene vorzugsweise um 180° zur Umsetzung der Werkstückträger zwischen den Fördereinrichtungen und dem Prozessmodul ermöglicht.

Um bei der erfindungsgemäßen Vorrichtung eine Möglichkeit vorzusehen, dass fehlerhafte Bauteile aus dem Bauteilumlauf ausgeschleust werden können, kann der Fördereinrichtung zum Rückführen der Werkstückträger bzw. dem Rücklaufband eine dritte Umsetzeinrichtung zum Ausschleusen von fehlerhaften Bauteilen zugeordnet werden. Somit können fehlerhaft produzierte Bauteile durch die erste und die zweite Umsetzeinrichtung von dem Einlaufband auf das Rücklaufband umgesetzt werden, um dann schließlich das fehlerhafte Bauteil durch die dritte Umsetzeinrichtung aus dem Bauteilumlauf auszuschleusen.

Bei allen vorgeschlagenen Ausführungen kann eine Seitenführung der Werkstückträger durch wenigstens eine Nut an der Werkstückträgerunterseite vorgesehen sein.

Bei einer vorteilhaften Weiterführung der Erfindung sind an der Unterseite der Werkstückträger um 90° gekreuzte Nuten vorgesehen, damit der Werkstückträger in jeder Lage auf die Zugmittelförderstrecke aufgesetzt werden kann.

Die erfindungsgemäß vorgeschlagene Vorrichtung eignet sich insbesondere zum Einsatz bei Fertigungsanlagen, die aus miniaturisierten, modular aufgebauten Fertigungsmodulen bzw. Bearbeitungsstationen bestehen. Jedoch kann sie auch bei Prüfstationen oder anderen Behandlungsstationen Anwendung finden. Weitere Vorteile und vorteilhafte Ausgestaltungen des Gegenstandes nach der Erfindung sind der Beschreibung, der Zeichnung und den Patentansprüchen entnehmbar.

### Zeichnung

Ein Ausführungsbeispiel einer Vorrichtung nach der Erfindung ist in der Zeichnung schematisch vereinfacht dargestellt und wird in der nachfolgenden Beschreibung näher erläutert. Es zeigen:
Figur 1 eine schematische dreidimensionale Ansicht eines Transportmoduls einer modular aufgebauten Zugmittelförderstrecke zum Transportieren von Werkstückträgern zu und von einer Bearbeitungsstation;
Figur 2 eine Seitenansicht des Transportmoduls gemäß der Figur 1; und
Figur 3 eine schematisierte Draufsicht auf zwei Werkstückträger an einer Umsetzeinrichtung des Transportmoduls gemäß den Figuren 1 und 2 in Alleinstellung.

### Beschreibung des Ausführungsbeispiels

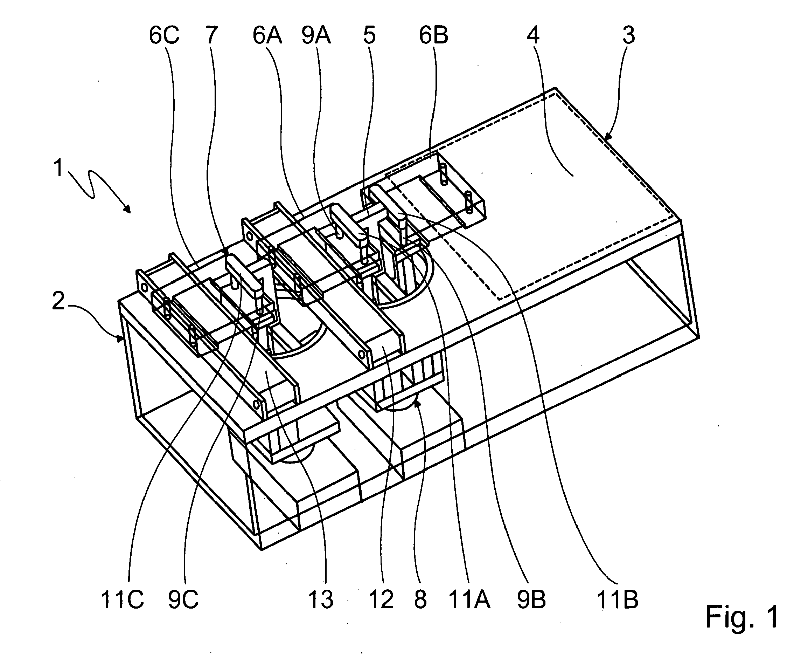

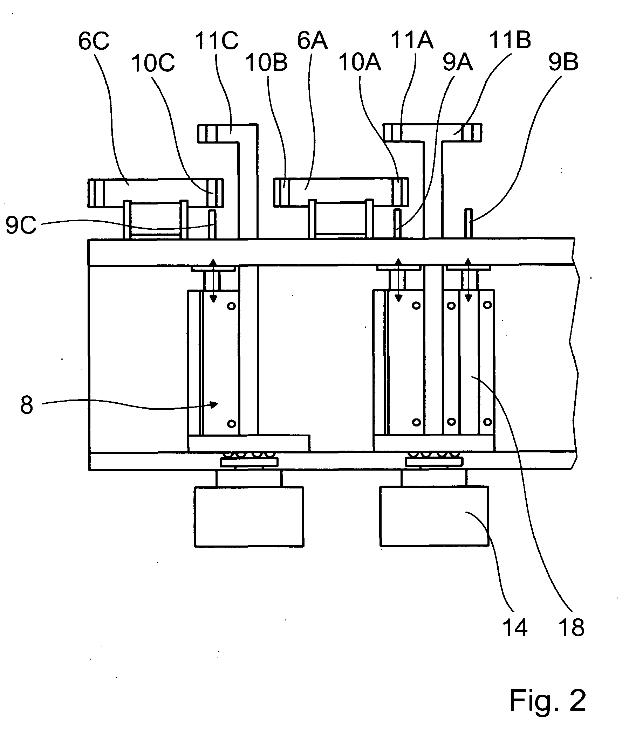

In den Figuren 1 und 2 ist eine mögliche Ausführungsform einer erfindungsgemäßen Vorrichtung mit einer Zugmittelförderstrecke 1 zum Transportieren von Werkstückträgern 6A, 6B, 6C, auf denen zu bearbeitenden Bauteile angeordnet sein können, dargestellt, wobei die Zugmittelförderstrecke 1 modular aufgebaut ist aus mehreren Transportmodulen 2, von denen lediglich eines beispielhaft mit einem nur symbolisch durch eine gestrichelte Linie dargestellten Prozessmodul 4 einer Bearbeitungsstation 3 gezeigt ist.

Die Zugmittelförderstrecke 1 ist mit jeder Bearbeitungsstation 3 zum Zuführen und Abführen der Werkstückträger 6A, 6B, 6C gekoppelt und derart modular aufgebaut, dass jeder Bearbeitungsstation 3 ein Transportmodul 2 zugeordnet ist.

Die Transportmodule 2 mehrerer nebeneinander angeordneter Bearbeitungsstationen 3 bilden somit einen durchgehenden Transportweg für die Werkstückträger 6A, 6B, 6C in dem Fertigungsbereich der Bearbeitungsstationen 3.

Das Transportmodul 1 weist jeweils als Fördereinrichtungen ein Einlaufband 12 zum Zuführen eines Werkstückträgers 6A, 6B, 6C mit einem zu bearbeitenden Bauteil und ein Rücklaufband 13 zum Zurückführen des bearbeiteten Bauteils bzw. des Werkstückträgers 6A, 6B, 6C auf.

Das Einlaufband 12 und das Rücklaufband 13 sind etwa parallel zueinander angeordnet, wobei das Einlaufband 12 einem zum Bearbeiten des Bauteiles vorgesehenen Prozessmodul 4 benachbart ist.

Dem Einlaufband 12 ist als Überführeinrichtung des Transportmoduls 2 eine erste Umsetzeinrichtung 5 zugeordnet, mit der der Werkstückträger 6A, 6B, 6C von dem Einlaufband 12 entnehmbar und dem Prozessmodul 4 zum Bearbeiten eines darauf angeordneten Bauteils zugeführt werden kann. Nach der Bearbeitung des Bauteils kann der Werkstückträger 6A, 6B, 6C aus dem Prozessmodul 4 wieder entnommen werden und zunächst auf das Einlaufband 12 gesetzt werden.

Zwischen dem Einlaufband 12 und dem Rücklaufband 13 ist eine zweite Umsetzeinrichtung 7 als weitere Überführeinrichtung vorgesehen, mit der der Werkstückträger 6A, 6B, 6C mit dem bearbeiteten Bauteil von dem Einlaufband 12 auf das Rücklaufband 13 transportiert werden kann, um das fertig bearbeitete Bauteil aus der Fertigungsanlage zu transportieren.

Die Überführ- bzw. Umsetzeinrichtungen 5, 7 sind jeweils im Wesentlichen unterhalb der Förderebene der Zugmittelförderstrecke 1 angeordnet und senkrecht zu dieser bewegbar, wobei die Breite der Zugmittelförderstrecke 1 und der Werkstückträger 6A, 6B, 6C derart gewählt ist, dass die lose auf der Zugmittelförderstrecke 1 aufliegenden und durch Nuten an ihrer Unterseite hieran geführten Werkstückträger 6A, 6B, 6C seitlich über die Zugmittelförderstrecke 1 überstehen. Damit können die Umsetzeinrichtungen 5, 7 die Werkstückträger 6A, 6B, 6C bei einer Hubbewegung an ihren über die Zugmittelförderstrecke 1 überstehenden Bereichen von unten greifen.

Entsprechend weisen die Umsetzeinrichtungen 5, 7 bei der in den Figuren 1 und 2 dargestellten Ausführungsform jeweils eine Höhenverstelleinrichtung 8 und eine Dreheinrichtung 14 auf. Die Höhenverstelleinrichtung 8 ist vorliegend mit über einen Linearschlitten 18 höhenverstellbaren Zapfenpaaren 9A, 9B, 9C, die Greifabschnitte der Überführeinrichtung definieren, ausgebildet, wobei die Zapfenpaare in korrespondierende Öffnungen 10A, 10B an dem jeweiligen Werkstückträger 6A, 6B, 6C eingreifen, um den Werkstückträger 6A, 6B, 6C zu handhaben.

Um den angehobenen Werkstückträger 6A, 6B, 6C zum Prozessmodul 4 zu bringen, weist bei der gezeigten Ausführung jede Umsetzeinrichtung 5, 7 als Drehverstellung einen Schwenkantrieb 14 auf, der eine Drehung der Zapfenpaare 9A, 9B, 9C in einer horizontalen Ebene ermöglicht.

Um den Werkstückträger 6A, 6B, 6C sicher mit dem jeweiligen Zapfenpaar 9A, 9B, 9C zu handhaben, ist bei der vorliegenden Ausführung jeweils ein über der Förderebene angeordneter Gegenhalterarm 11A, 11B, 11C vorgesehen, mit dem der betreffende Werkstückträger 6A, 6B, 6C zwischen dem Zapfenpaar 9A, 9B, 9C und dem fluchtend hierzu angeordneten Gegenhalter 11A, 11B, 11C verspannt werden kann.

Um die Wechselzeiten der Bauteile weiter zu reduzieren, ist die erste Umsetzeinrichtung 5 doppelarmig ausgeführt, wobei zu dem ersten Zapfenpaar 9A ein zweites Zapfenpaar 9B parallel und symmetrisch versetzt zu einer Drehachse angeordnet ist, so dass ein Werkzeugträger 6A, 6B, 6C mit einem bereits bearbeiteten Bauteil aus dem Prozessmodul 4 entnehmbar ist und gleichzeitig ein Werkstückträger 6A, 6B, 6C mit einem noch zu bearbeitendem Bauteil durch die Drehung der Umsetzeinrichtung 5 um 180° ausgetauscht werden kann.

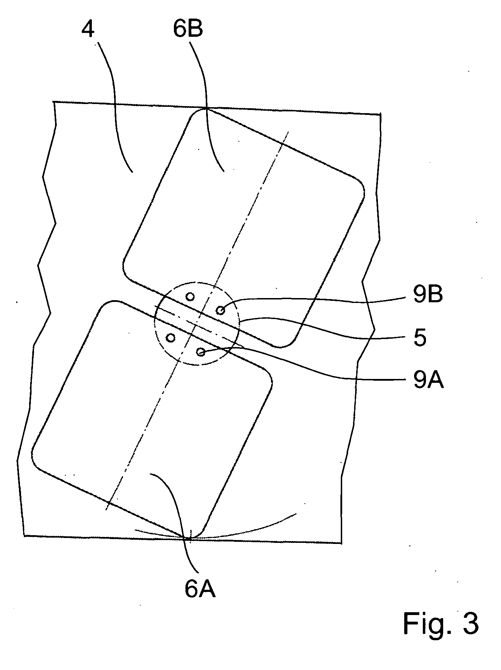

Für eine Überführeinrichtung wie die Umsetzeinrichtung 5 als Bestandteil des Prozessmoduls 4 mit einer vorgegebenen kompakten Breite von vorliegend beispielsweise 220 mm ergibt sich eine wichtige Beziehung zwischen der Breite des Prozessmoduls 4 und den Abmessungen der Werkstückträger 6A, 6B, 6C, die in der Figur 3 veranschaulicht ist. Darin ist ersichtlich wie das Werkstückträger-Paar 6A, 6B innerhalb der Modulgrenze gedreht wird, wobei die Stellung gezeigt ist, in der die Ecken der Werkstückträger 6A, 6B den Modulgrenzen am nähesten sind.

Bedeutend ist hier, dass sich der Punkt eines Werkstückträgers, der am weitesten von der Drehachse der Umsetzeinrichtung 5 entfernt ist, innerhalb der Modulgrenzen bewegt, damit sich die Umsetzeinrichtungen benachbarter Prozessmodule 4 bzw. benachbarter Transportmodule 2 nicht gegenseitig stören können. Das heißt, der maximale Abstand zwischen der Drehachse der Umsetzeinrichtung 5 und dem entferntesten Punkt eines Werkstückträgers entspricht maximal der halben Modulbreite, wobei als Untergrenze dieses Abstandes bei einer bevorzugten Ausführung 90% dieser Obergrenze gewählt wird.

Um die Fläche der vorzugsweise quadratischen Werkstückträger 6A, 6B, 6C im Rahmen dieser geometrischen Vorgaben zu optimieren, sind die Ecken der Werkstückträger bei dem gezeigten Ausführungsbeispiel mit Abrundungen versehen.

Nachfolgend wird die Arbeitsweise der erfindungsgemäßen Vorrichtung zusammenfassend beschrieben.

Mit dem Einlaufband 12 werden die seitlich über das Einlaufband 12 überstehenden Werkstückträger 6A, 6B, 6C mit zu bearbeitenden Bauteilen in die Bearbeitungsstation 3 transportiert, wobei die Werkstückträger 6A, 6B, 6C über einen Stopper an der ersten Umsetzeinrichtung 5 gestoppt werden.

Die doppelarmig ausgeführte Umsetzeinheit 5 fährt senkrecht zur Förderrichtung der Zugmittelförderstrecke 1 nach oben und nimmt über das erste Zapfenpaar 9A den Werkstückträger 6A durch Einführen der Zapfen des Zapfenpaares 9A in die korrespondierenden Öffnungen 10A an dem Werkstückträger 6A auf. Dabei hebt die Umsetzeinrichtung 5 den Werkstückträger 6A vom Einlaufband 12 ab.

Zeitgleich wird der in dem Prozessmodul 4 befindliche Werkstückträger 6B von derselben Umsetzeinrichtung 5 mit dem zweiten Zapfenpaar 9B aufgenommen. Durch eine 180°-Drehung der Umsetzeinrichtung 5 werden die Werkzeugträger 6A, 6B vertauscht und anschließend in einer Absenkbewegung auf das Einlaufband 12 bzw. in das Prozessmodul 4 abgesetzt. Durch diesen Bewegungsablauf wird die Bauteilwechselzeit minimiert und das Prozessmodul 4 optimal ausgelastet.

Die zweite Umsetzeinrichtung 7 ist vorliegend einarmig ausgebildet und arbeitet nach demselben Prinzip. Die Umsetzeinrichtung 7 setzt den Werkstückträger mit dem fertig bearbeiteten Bauteil von dem Einlaufband 12 auf das Rücklaufband 13 um. Mit einer Umsetzeinrichtung am Beginn einer Fertigungslinie und einer Umsetzeinrichtung am Ende der Fertigungslinie kann somit durch Verknüpfung von Bandvor- und Bandrücklauf ein geschlossener Bauteilumlauf erzeugt werden.

## Patentansprüche

1. Vorrichtung zum Transportieren von Werkstückträgern (6A, 6B, 6C) zwischen mehreren Bearbeitungsstationen (3), wobei eine Zugmittelförderstrecke (1) mit wenigstens einer Fördereinrichtung (12, 13) und wenigstens eine Überführeinrichtung (5, 7) zum Überführen der Werkstückträger (6A, 6B, 6C) zwischen der Zugmittelförderstrecke (1) und einer Bearbeitungsstation (3) vorgesehen sind, wobei die Werkstückträger (6A, 6B, 6C) lose aufliegend seitlich über die Zugmittelförderstrecke (1) überstehen und die Überführeinrichtung (5, 7) wenigstens teilweise unterhalb der Förderebene angeordnet ist, wobei ein Greifabschnitt der Überführeinrichtung senkrecht zur Förderebene bewegbar vorgesehen ist, so dass die Werkstückträger (6A, 6B, 6C) an ihrem über die Zugmittelförderstrecke (1) überstehenden Bereich von unten durch den Greifabschnitt greifbar sind,
**dadurch gekennzeichnet, dass** zumindest einer Fördereinrichtung (12), insbesondere der Fördereinrichtung (12) zum Zuführen der Werkstückträger (6A, 6B, 6C), zumindest eine erste Umsetzeinrichtung (5) als Überführeinrichtung zugeordnet ist, mit der die Werkstückträger (6A, 6B, 6C) der Fördereinrichtung (12) mit dem Greifabschnitt entnehmbar und einem Prozessmodul (4) der Bearbeitungsstation (3) zuführbar sowie nach einem Prozessablauf dem Prozessmodul (4) wieder entnehmbar sind.

2. Vorrichtung nach Anspruch 1,
**dadurch gekennzeichnet, dass** die Zugmittelförderstrecke (1) ein Einlaufband (12) zum Zuführen der Werkstückträger (6A, 6B, 6C) und ein parallel beabstandet hierzu angeordnetes Rücklaufband (13) zum Zurückführen der Werkstückträger (6A, 6B, 6C) als Fördereinrichtungen umfasst, wobei die Zugmittelförderstrecke (1) insbesondere als ein Doppelgurtförderer ausgebildet ist.

3. Vorrichtung nach Anspruch 1 oder 2,
**dadurch gekennzeichnet, dass** die Zugmittelförderstrecke (1) aus mehreren einen durchgehenden Transportweg bildenden Transportmodulen (2) aufgebaut ist, wobei jedes Transportmodul (2) einer bestimmten Bearbeitungsstation (3) zugeordnet ist und wenigstens eine Fördereinrichtung (12, 13) und eine Überführeinrichtung (5, 7) für die Werkstückträger (6A, 6B, 6C) aufweist.

4. Vorrichtung nach Anspruch 3,
**dadurch gekennzeichnet, dass** jedes Transportmodul (2) eine Fördereinrichtung (12) zum Zuführen der Werkstückträger (6A, 6B, 6C) und eine Fördereinrichtung (13) zum Zurückführen der Werkstückträger (6A, 6B, 6C) umfasst.

5. Vorrichtung nach einem der vorstehenden Ansprüche,
**dadurch gekennzeichnet, dass** der ersten Umsetzeinrichtung (5) zumindest ein Anhalteelement zum Anhalten der Werkstückträger (6A, 6B, 6C) auf der Fördereinrichtung (12) zugeordnet ist.

6. Vorrichtung nach einem der vorstehenden Ansprüche,
**dadurch gekennzeichnet, dass** einer Fördereinrichtung (12) zum Zuführen der Werkstückträger (6A, 6B, 6C) und einer Fördereinrichtung (13) zum Rückführen der Werkstückträger (6A, 6B, 6C) eine zweite Umsetzeinrichtung (7) gemeinsam zugeordnet ist, mit der die Werkstückträger (6A, 6B, 6C) von der Fördereinrichtung (12) zum Zuführen der Werkstückträger (6A, 6B, 6C) auf die Fördereinrichtung (13) zum Rückführen der Werkstückträger (6A, 6B, 6C) bringbar sind.

7. Vorrichtung nach einem der vorstehenden Ansprüche,
**dadurch gekennzeichnet, dass** eine Höhenverstelleinrichtung (8) der Umsetzeinrichtung (5, 7) zumindest ein über einen Linearschlitten (18) höhenverstellbares Zapfenpaar (9A, 9B, 9C) als Greifabschnitt aufweist, das in korrespondierende Öffnungen (10A, 10B, 10C) des jeweiligen Werkstückträgers (6A, 6B, 6C) eingreift, um den Werkstückträger (6A, 6B, 6C) zu handhaben.

8. Vorrichtung nach einem der vorstehenden Ansprüche,
**dadurch gekennzeichnet, dass** eine Dreheinrichtung (14) der Umsetzeinrichtung (5, 7) als ein Schwenkantrieb ausgebildet ist, der zur Drehung der Werkstückträger (6A, 6B, 6C) in einer horizontalen Ebene vorzugsweise um wenigstens 180° ausgelegt ist.

9. Vorrichtung nach Anspruch 8,
**dadurch gekennzeichnet, dass** die Dreheinrichtung (14) die Werkstückträger (6A, 6B, 6C) mittels wenigstens eines Zapfenpaares (9A, 9B, 9C) als Greifabschnitt, welches vorzugsweise auch der Höhenverstelleinrichtung (8) zugeordnet ist, greift.

10. Vorrichtung nach einem der vorstehenden Ansprüche,
**dadurch gekennzeichnet, dass** die erste Umsetzeinrichtung (5) zwei symmetrisch zu einer Drehachse angeordnete Zapfenpaare (9A, 9B) als Greifabschnitt aufweist, wobei jedes Zapfenpaar (9A, 9B) zum Eingreifen in einen Werkstückträger (6A, 6B) vorgesehen ist.

11. Vorrichtung nach einem der Ansprüche 7, 9 oder 10,
**dadurch gekennzeichnet, dass** jedem Zapfenpaar (9A, 9B, 9C) ein korrespondierender Gegenhalterarm (11A, 11B, 11C) zugeordnet ist.

12. Vorrichtung nach einem der vorstehenden Ansprüche,
**dadurch gekennzeichnet, dass** der Fördereinrichtung (13) zum Rückführen der Werkstückträger (6A, 6B, 6C) eine dritte Umsetzeinrichtung zum Ausschleusen von fehlerhaften Bauteilen zugeordnet ist.

13. Vorrichtung nach einem der vorstehenden Ansprüche, mit Werkstückträger (6A,6B,6C)
**dadurch gekennzeichnet, dass** zur Führung der Werkstückträger (6A, 6B, 6C) an der Zugmittelförderstrecke (1), insbesondere zu ihrer Seitenführung, wenigstens eine Nut an der Unterseite der Werkstückträger (6A, 6B, 6C) ausgebildet ist.

## Claims

1. Apparatus for transporting workpiece carriers (6A, 6B, 6C) between a plurality of processing stations (3), wherein a traction means conveying section (1) having at least one conveying device (12, 13), and at least one transferring device (5, 7) for transferring the workpiece carriers (6A, 6B, 6C) between the traction means conveying section (1) and a processing station (3) are provided, wherein the workpiece carriers (6A, 6B, 6C) protrude laterally beyond the traction means conveying section (1) in a manner resting loosely thereon and the transferring device (5, 7) is arranged at least partially beneath the conveying plane, wherein a gripping portion of the transferring device is provided in a movable manner perpendicularly to the conveying plane, such that the workpiece carriers (6A, 6B, 6C) are grippable from below by the gripping portion in their region protruding beyond the traction means conveying section (1),
**characterized in that** at least one conveying device (12), in particular the conveying device (12) for feeding the workpiece carriers (6A, 6B, 6C), is assigned at least a first transposing device (5) as transferring device, by way of which the workpiece carriers (6A, 6B, 6C) are removable from the conveying device (12) by way of the gripping portion and are feedable to a processing module (4) of the processing station (3) and are removable from the processing module (4) again after a process sequence.

2. Apparatus according to Claim 1,
**characterized in that** the traction means conveying section (1) comprises as conveying devices an inlet belt (12) for feeding the workpiece carriers (6A, 6B, 6C) and a return belt (13), which is arranged in a manner spaced apart from and parallel to the latter, for returning the workpiece carriers (6A, 6B, 6C), wherein the traction means conveying section (1) is formed in particular as a double belt conveyor.

3. Apparatus according to Claim 1 or 2,
**characterized in that** the traction means conveying section (1) is constructed from a plurality of transport modules (2) that form a continuous transport section, wherein each transport module (2) is assigned to a particular processing station (3) and has at least one conveying device (12, 13) and a transferring device (5, 7) for the workpiece carriers (6A, 6B, 6C).

4. Apparatus according to Claim 3,
**characterized in that** each transport module (2) comprises a conveying device (12) for feeding the workpiece carriers (6A, 6B, 6C) and a conveying device (13) for returning the workpiece carriers (6A, 6B, 6C).

5. Apparatus according to one of the preceding claims,
**characterized in that** the first transposing device (5) is assigned at least one stopping element for stopping the workpiece carriers (6A, 6B, 6C) on the conveying device (12).

6. Apparatus according to one of the preceding claims,
**characterized in that** a conveying device (12) for feeding the workpiece carriers (6A, 6B, 6C) and a conveying device (13) for returning the workpiece carriers (6A, 6B, 6C) are jointly assigned a second transposing device (7), by way of which the workpiece carriers (6A, 6B, 6C) are movable from the conveying device (12) for feeding the workpiece carriers (6A, 6B, 6C) to the conveying device (13) for returning the workpiece carriers (6A, 6B, 6C).

7. Apparatus according to one of the preceding claims,
**characterized in that** a height adjusting device (8) of the transposing device (5, 7) has at least one pin pair (9A, 9B, 9C), which is height adjustable via a linear slide (18), as gripping portion, said pin pair (9A, 9B, 9C) engaging in corresponding openings (10A, 10B, 10C) in the respective workpiece carrier (6A, 6B, 6C) in order to handle the workpiece carrier (6A, 6B, 6C).

8. Apparatus according to one of the preceding claims,
**characterized in that** a rotary device (14) of the transposing device (5, 7) is formed as a pivoting drive which is designed to rotate the workpiece carriers (6A, 6B, 6C) in a horizontal plane, preferably through at least 180°.

9. Apparatus according to Claim 8,
**characterized in that** the rotary device (14) grips the workpiece carriers (6A, 6B, 6C) by means of at least one pin pair (9A, 9B, 9C) as gripping portion, said pin pair (9A, 9B, 9C) being assigned preferably also to the height adjusting device (8) .

10. Apparatus according to one of the preceding claims,
**characterized in that** the first transposing device (5) has two pin pairs (9A, 9B), arranged symmetrically to a rotation axis, as gripping portion, wherein each pin pair (9A, 9B) is provided to engage in a workpiece carrier (6A, 6B) .

11. Apparatus according to one of Claims 7, 9 and 10,
**characterized in that** each pin pair (9A, 9B, 9C) is assigned a corresponding brace arm (11A, 11B, 11C) .

12. Apparatus according to one of the preceding claims,
**characterized in that** the conveying device (13) for returning the workpiece carriers (6A, 6B, 6C) is assigned a third transposing device for discharging faulty components.

13. Apparatus according to one of the preceding claims, having workpiece carriers (6A, 6B, 6C),
**characterized in that**, in order to guide the workpiece carriers (6A, 6B, 6C) in the traction means conveying section (1), in particular to guide them laterally, at least one groove is formed on the underside of the workpiece carriers (6A, 6B, 6C).

## Revendications

1. Dispositif pour transporter des supports de pièces à usiner (6A, 6B, 6C) entre plusieurs postes d'usinage (3), une section de transport à moyen de traction (1) avec au moins un dispositif de transport (12, 13) et au moins un dispositif de transfert (5, 7) pour le transfert des supports de pièces à usiner (6A, 6B, 6C) étant prévue entre la section de transport à moyen de traction (1) et un poste d'usinage (3), les supports de pièces à usiner (6A, 6B, 6C), reposant lâchement, dépassant latéralement au-delà de la section de transport à moyen de traction (1) et le dispositif de transfert (5, 7) étant disposé au moins en partie en dessous du plan de transport, une portion de préhension du dispositif de transfert étant prévue de manière déplaçable perpendiculairement au plan de transport de telle sorte que les supports de pièces à usiner (6A, 6B, 6C) puissent être saisis au niveau de leur région dépassant au-delà de la section de transport à moyen de traction (1) par le dessous par la portion de préhension,
**caractérisé en ce qu'**au moins un dispositif de transport (12), en particulier le dispositif de transport (12) pour amener les supports de pièces à usiner (6A, 6B, 6C), est associé à au moins un premier dispositif de changement (5) en tant que dispositif de transfert, avec lequel les supports de pièces à usiner (6A, 6B, 6C) du dispositif de transport (12) peuvent être prélevés avec la portion de préhension, et peuvent être acheminés à un module de traitement (4) du poste d'usinage (3), et peuvent être à nouveau enlevés du module de traitement (4) après un déroulement du traitement.

2. Dispositif selon la revendication 1,
**caractérisé en ce que** la section de transport à moyen de traction (1) comprend en tant que dispositifs de transport, une bande d'entrée (12) pour amener les supports de pièces à usiner (6A, 6B, 6C) et une bande de retour (13) disposée parallèlement et à distance de celle-ci, pour ramener les supports de pièces à usiner (6A, 6B, 6C), la section de transport à moyen de traction (1) étant réalisée notamment sous forme de bande transporteuse à double courroie.

3. Dispositif selon la revendication 1 ou 2,
**caractérisé en ce que** la section de transport à moyen de traction (1) se compose de plusieurs modules de transport (2) formant une voie de transport continue, chaque module de transport (2) étant associé à un poste de traitement déterminé (3) et présentant au moins un dispositif de transport (12, 13) et un dispositif de transfert (5, 7) pour les supports de pièces à usiner (6A, 6B, 6C).

4. Dispositif selon la revendication 3,
**caractérisé en ce que** chaque module de transport (2) comprend un dispositif de transport (12) pour acheminer les supports de pièces à usiner (6A, 6B, 6C) et un dispositif de transport (13) pour ramener les supports de pièces à usiner (6A, 6B, 6C).

5. Dispositif selon l'une quelconque des revendications précédentes,
**caractérisé en ce que** le premier dispositif de changement (5) est associé à au moins un élément d'arrêt pour arrêter les supports de pièces à usiner (6A, 6B, 6C) sur le dispositif de transport (12).

6. Dispositif selon l'une quelconque des revendications précédentes,
**caractérisé en ce qu'**un dispositif de transport (12) pour acheminer les supports de pièces à usiner (6A, 6B, 6C) et un dispositif de transport (13) pour ramener les supports de pièces à usiner (6A, 6B, 6C) sont associés en commun à un deuxième dispositif de changement (7) avec lequel les supports de pièces à usiner (6A, 6B, 6C) peuvent être amenés depuis le dispositif de transport (12) pour amener les supports de pièces à usiner (6A, 6B, 6C) jusqu'au dispositif de transport (13) pour ramener les supports de pièces à usiner (6A, 6B, 6C).

7. Dispositif selon l'une quelconque des revendications précédentes,
**caractérisé en ce qu'**un dispositif de réglage en hauteur (8) du dispositif de changement (5, 7) présente, en tant que portion de préhension, au moins une paire de tourillons (9A, 9B, 9C) réglable en hauteur par le biais d'un chariot linéaire (18), laquelle portion de préhension vient en prise dans des ouvertures correspondantes (10A, 10B, 10C) du support de pièces à usiner (6A, 6B, 6C) respectif pour manipuler les supports de pièces à usiner (6A, 6B, 6C).

8. Dispositif selon l'une quelconque des revendications précédentes,
**caractérisé en ce qu'**un dispositif de rotation (14) du dispositif de changement (5, 7) est réalisé sous la forme d'un entraînement pivotant, qui est conçu pour faire tourner les supports de pièces à usiner (6A, 6B, 6C) dans un plan horizontal, de préférence d'au moins 180°.

9. Dispositif selon la revendication 8,
**caractérisé en ce que** le dispositif de rotation (14) saisit les supports de pièces à usiner (6A, 6B, 6C) au moyen d'au moins une paire de tourillons (9A, 9B, 9C) sous forme de portion de préhension, qui est associée de préférence aussi au dispositif de réglage en hauteur (8).

10. Dispositif selon l'une quelconque des revendications précédentes,
**caractérisé en ce que** le premier dispositif de changement (5) présente, en tant que portion de préhension, deux paires de tourillons (9A, 9B) disposées symétriquement par rapport à un axe de rotation, chaque paire de tourillons (9A, 9B) étant prévue pour s'engager dans un support de pièces à usiner (6A, 6B).

11. Dispositif selon l'une quelconque des revendications 7, 9 ou 10,
**caractérisé en ce qu'**un bras de retenue conjugué correspondant (11A, 11B, 11C) est associé à chaque paire de tourillons (9A, 9B, 9C).

12. Dispositif selon l'une quelconque des revendications précédentes,
**caractérisé en ce que** le dispositif de transport (13) pour le retour des supports de pièces à usiner (6A, 6B, 6C) est associé à un troisième dispositif de changement pour évacuer les composants défectueux.

13. Dispositif selon l'une quelconque des revendications précédentes, comprenant des supports de pièces à usiner (6A, 6B, 6C),
**caractérisé en ce que** pour le guidage des supports de pièces à usiner (6A, 6B, 6C) sur la section de transport à moyen de traction (1), en particulier pour leur guidage latéral, au moins une rainure est réalisée sur le côté inférieur des supports de pièces à usiner (6A, 6B, 6C).
